# EUROPÄISCHE PATENTSCHRIFT

(11) **EP 1 868 734 B1**
(45) Veröffentlichungstag und Bekanntmachung des Hinweises auf die Patenterteilung: **13.08.2008**
(21) Anmeldenummer: 06707320.5
(22) Anmeldetag: 28.02.2006
(51) Int. Cl.: B05C 1/08

(54) **STREICHKOPF FÜR WAFFELBLATT-STREICHMASCHINEN**
COATING HEAD FOR WAFFLE SHEET COATING MACHINES
TÊTE D'ENDUCTION POUR MACHINES À ENDUIRE À PLAQUE DE GAUFRAGE

(30) Priorität: 14.04.2005 DE 102005017391
(43) Veröffentlichungstag der Anmeldung: 26.12.2007
(73) Patentinhaber: Hebenstreit GMBH, 64527 Mörfelden/Walldorf (DE)
(72) Erfinder: ENGELMANN, Michael, 65474 Bischofsheim (DE)
(74) Vertreter: Katscher Habermann Patentanwälte
(86) Internationale Anmeldenummer: PCT/EP2006/001813
(87) Internationale Veröffentlichungsnummer: WO 2006/108471

(56) Entgegenhaltungen:
- US-A- 4 449 476
- US-A1- 2005 022 730
- US-B1- 6 258 168
- US-B1- 6 358 318

## Beschreibung

Die Erfindung betrifft einen Streichkopf für Waffelblatt-Streichmaschinen mit einer Streichwalze und einer hierzu achsparallel angeordneten Gegenwalze, die drehbar und gegenläufig antreibbar in einem Gestell gelagert sind und zwischen sich einen Walzenspalt begrenzen, über dem sich ein Aufnahmeraum für die Streichmasse befindet, der beidseitig durch gegenüber der Streichwalze und der Gegenwalze abgedichtete erste und zweite Seitenabschlusswände begrenzt wird.

US 6258 168 zeigt eine derartige streichmaschine.

Derartige Streichköpfe dienen dazu, in Waffelblatt-Streichmaschinen die Streichmasse, üblicherweise Crememasse auf ein ebenes oder Vertiefungen aufweisendes Waffelblatt aufzutragen. Die Streichmasse wird hierbei aus dem über den beiden Walzen gebildeten Aufnahmeraum durch den zwischen den beiden Walzen gebildeten Walzenspalt mit vorgegebener Filmdicke dosiert ausgetragen und auf die relativ zum Streichkopf darunter entlang bewegten Waffelblätter aufgebracht.

Hierfür sind grundsätzlich zwei unterschiedliche Verfahren gebräuchlich. Beim Filmverfahren nimmt ein Filmmesser den Streichmassenfilm von der Streichwalze ab und überträgt ihn über eine kurze freie Filmlänge auf die Oberfläche des Waffelblatts. Wenn das Waffelblatt Vertiefungen aufweist, wird die Streichmasse mittels einer Einstreichvorrichtung anschließend in die Vertiefungen des Waffelblatts eingestrichen. Beim Kontaktverfahren wird der Streichmassenfilm unmittelbar von der Streichwalze auf die Oberfläche des Waffelblatts übertragen.

Üblicherweise ist die Filmdicke der Streichmasse durch Veränderung des Walzenspaltes und der Streichwalzengeschwindigkeit einstellbar. In vielen Fällen können die Streichwalze und die Gegenwalze temperiert werden, um eine für den Streichvorgang optimale Temperatur der jeweiligen Streichmasse einzuhalten.

Jeweils nach der Beschaffenheit des zu bestreichenden Waffelblatts, insbesondere der Ausbildung oder dem Fehlen von Vertiefungen, aber auch zur optimalen Anpassung an das Verhalten der jeweiligen Streichmasse ist in vielen Fällen eine rasche und einfache Umstellung vom Filmverfahren auf das Kontaktverfahren und umgekehrt erwünscht. Schwierigkeiten bereitet hierbei die Einstellung der Streichbreite. Während die Breite der zu bestreichenden Waffelblattfläche vorgegeben ist, hängt die Wahl der Walzenspaltlänge davon ab, ob nach dem Filmverfahren oder dem Kontaktverfahren gearbeitet werden soll.

Beim Kontaktverfahren sollte die Walzenspaltlänge möglichst genau der Breite der zu bestreichenden Waffelblattfläche entsprechen, weil der Streichmassenfilm in der Breite, wie er aus dem Walzenspalt austritt, auf die Waffelblattfläche aufgetragen wird.

Beim Filmverfahren jedoch kommt es im Bereich der freien Filmlänge zwischen der Streichwalze und der Waffelblattoberfläche zu einer seitlichen Einschnürung des Streichmassenfilms. Die Länge des Walzenspaltes muss daher entsprechend größer gewählt werden als die Breite der zu bestreichenden Waffelblattfläche.

Um eine optimale Filmbreite für beide Verfahren zu gewährleisten, mussten bisher der Streichkopf oder zumindest die Walzen bei der Umstellung auf das andere Verfahren ausgewechselt werden. Weil dies sehr aufwändig ist, wird in der Praxis häufig ein Kompromiss für die Walzenspaltlänge gewählt, der sowohl für das Filmverfahren als auch für das Kontaktverfahren noch annehmbar, aber jeweils nicht optimal ist.

Aufgabe der Erfindung ist es daher, einen Streichkopf der eingangs genannten Gattung so auszubilden, dass mit einfachen Maßnahmen eine Veränderung der Walzenspaltlänge ohne Walzenwechsel ermöglicht wird.

Diese Aufgabe wird erfindungsgemäß dadurch gelöst, dass die Streichwalze und die Gegenwalze axial gegeneinander versetzt und axial relativ zueinander verstellbar sind und dass zumindest im Bereich des Aufnahmeraums die erste Seitenabschlusswand mittels einer Radialdichtung gegenüber der Umfangsfläche der Streichwalze und die zweite Seitenabschlusswand mittels einer Radialdichtung gegenüber der Umfangsfläche der Gegenwalze abgedichtet ist.

Die wechselseitige Abdichtung der beiden Seitenabschlusswände mittels einer Radialdichtung an der Umfangsfläche der jeweils zugeordneten Walze ermöglicht eine Relativverschiebung der beiden Walzen gegeneinander, wobei die Abdichtung der beiden Seitenabschlusswände an beiden Walzen bestehen bleibt. Auf diese Weise kann die Länge des Walzenspaltes allein durch Relativverschiebung der beiden Walzen gegeneinander auf das für das jeweilige Verfahren optimale Maß eingestellt werden. Ein Walzenwechsel ist nicht erforderlich.

Um bei der Relativverschiebung der beiden Walzen zugleich auch eine Verstellung der beiden Seitenabschlusswände relativ zueinander ohne zusätzliche Maßnahmen durchführen zu können, ist in Ausgestaltung des Erfindungsgedankens vorgesehen, dass die erste Seitenabschlusswand relativ zu der Gegenwalze axial unverschiebbar gelagert ist und dass die zweite Seitenabschlusswand relativ zu der Streichwalze axial unverschiebbar gelagert ist. Damit ist es auch möglich, zwischen jeder Walze und der einen zugeordneten, jeweils axial unverschiebbar daran gelagerten Seitenabschlusswand eine in ihrem Aufbau verhältnismäßig einfache Axialdichtung vorzusehen.

Gemäß einer bevorzugten Ausführung der Erfindung ist vorgesehen, dass die beiden Radialdichtungen zwischen der ersten Seitenabschlusswand und der Streichwalze sowie zwischen der zweiten Seitenabschlusswand und der Gegenwalze Spaltdichtungen sind, die zwischen der jeweils zugeordneten Walzenumfangsfläche und einer Zylinderteilfläche der Seitenabschlusswand jeweils einen Dichtspalt bilden. Damit wird in konstruktiv und fertigungstechnisch sehr einfacher Weise eine Abdichtung geschaffen, die auch axiale Verschiebungen infolge der Relativverstellung der beiden Walzen zulässt.

Die Dichtwirkung dieser Spaltdichtungen kann noch dadurch verbessert werden, dass die jeweils den Dichtspalt begrenzende Zylinderteilfläche eine in Walzendrehrichtung in den Aufnahmeraum zurückführende Rückführ-Wendelnut aufweist.

Die Erfindung wird nachfolgend an Ausführungsbeispielen näher erläutert, die in der Zeichnung dargestellt sind. Es zeigt:
Fig. 1 in einer Draufsicht einen Streichkopf für Waffelblatt-Streichmaschinen mit axial gegeneinander verschiebbaren Walzen in einer ersten Breiteneinstellung,
Fig. 2 den Streichkopf nach Fig. 1 in einer zweiten Breiteineinstellung,
Fig. 3 einen vergrößerten Schnitt längs der Linie III-III in Fig. 1 bei Verwendung des Streichkopfs für das Filmverfahren,
Fig. 4 einen vergrößerten Schnitt längs der Linie III-III in Fig. 1 bei Verwendung des Streichkopfs für das Kontaktverfahren,
Fig. 5 einen vergrößerten Schnitt längs der Linie V-V in Fig. 1,
Fig. 6 einen vergrößerten Schnitt längs der Linie VI-VI in Fig. 1,
Fig. 7 und 8 in Darstellungen entsprechen der Fig. 1 unterschiedliche Oberflächenausführungen der Walzen und
Fig. 9 in einer Draufsicht entsprechend der Fig. 1 in schematischer Darstellungsweise die Verstellmöglichkeiten des Streichkopfs.

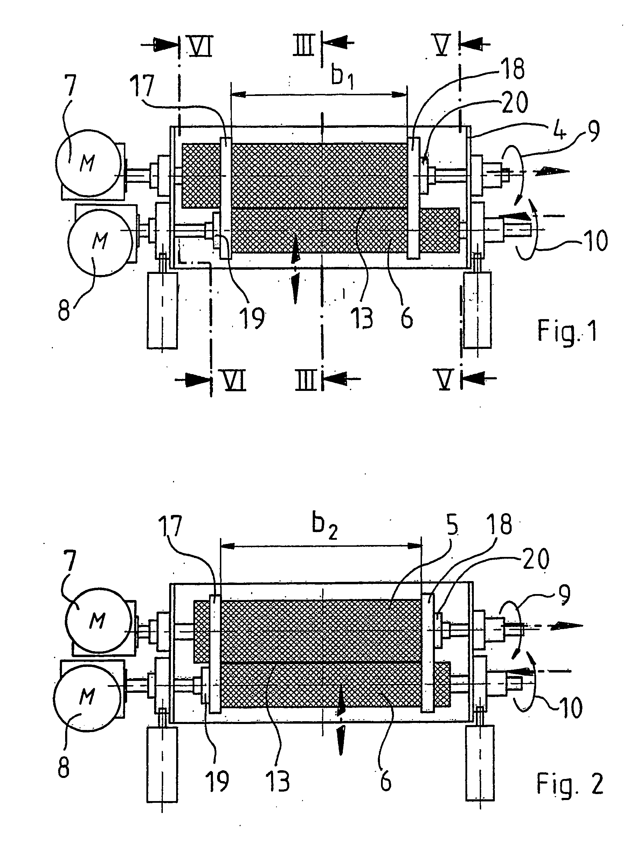

Der in den Fig. 1 - 6 dargestellte Streichkopf ist zum Einsatz in einer Waffelblatt-Streichmaschine bestimmt und dient dazu, eine Streichmasse 1, beispielsweise Crememasse, in Form eines dünnen Films 2 auf Waffelblätter 3 aufzutragen.

In einem in Fig. 1 nur schematisch angedeuteten Gestell 4 des Streichkopfs sind eine Streichwalze 5 und eine Gegenwalze 6 drehbar gelagert und durch Walzenantriebe 7 bzw. 8 in Richtung der eingezeichneten Pfeile 9, 10 entgegengesetzt antreibbar.

Aus einer Streichmassen-Zuführeinrichtung 11 gelangt die dickflüssige oder auch dünnflüssige Streichmasse 1 in einen Aufnahmeraum 12 oberhalb eines Walzenspaltes 13 zwischen der Streichwalze 5 und der Gegenwalze 6. Der aus dem Walzenspalt 13 austretende Film 2 wird durch ein Filmmesser 14 von der Oberfläche der Gegenwalze 6 gelöst und haftet an der Oberfläche der Streichwalze 5.

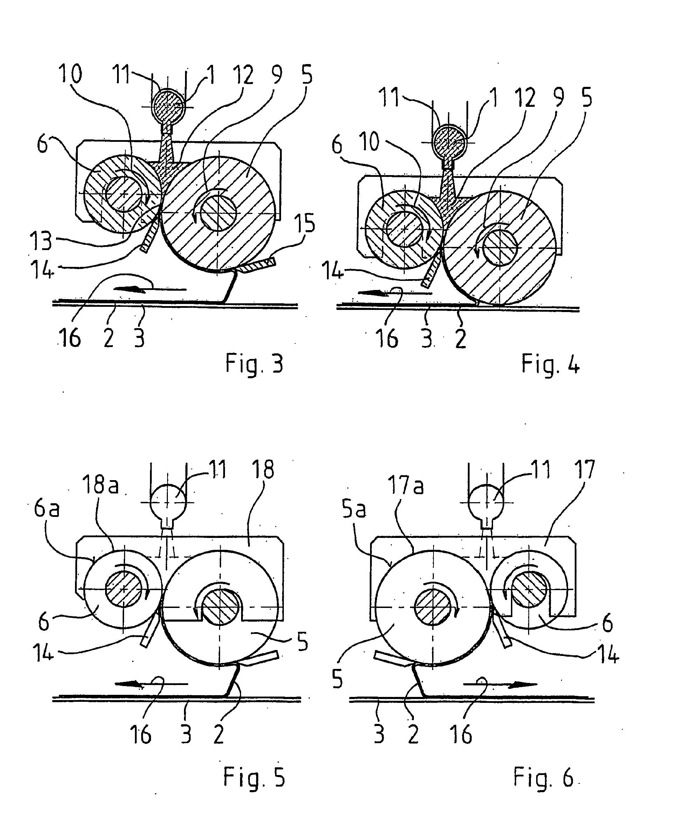

Wenn der Streichkopf für das Filmverfahren eingesetzt wird (Fig. 3), wird der Film 2 durch ein weiteres Filmmesser 15 von der Oberfläche der Streichwalze 5 gelöst und senkt sich frei auf die Oberfläche des darunter in Richtung des Pfeiles 16 bewegten Waffelblatts 3 ab. Wenn der Streichkopf für das Kontaktverfahren eingerichtet ist (Fig. 4), überträgt die auf das Waffelblatt 2 abgesenkte Streichwalze 5 den Film 2 unmittelbar auf die Oberfläche des Waffelblatts 3.

Der Aufnahmeraum 12 und der Walzenspalt 13 sind nach beiden Seiten durch eine erste Seitenabschlusswand 17 und eine zweite Seitenabschlusswand 18 begrenzt. Im oberen Bereich der Streichwalze 5 und der Gegenwalze 6, zumindest aber im Bereich des Aufnahmeraums 12, sind die beiden Seitenabschlusswände 17 und 18 gegenüber der Streichwalze 5 und der Gegenwalze 6 abgedichtet. Hierzu ist die erste Seitenabschlusswand 17 relativ zu der Gegenwalze 6 axial unverschiebbar in einer Lagerung 19 gelagert und dort mittels einer Axialdichtung gegenüber der Gegenwalze 6 abgedichtet. In gleicher Weise ist die zweite Seitenabschlusswand 18 in einer Lagerung 20 relativ zu der Streichwalze 5 axial unverschiebbar gelagert und dort ebenfalls durch eine Axialdichtung gegenüber der Streichwalze 5 abgedichtet.

Zumindest im Bereich des Aufnahmeraums 12, beim dargestellten Ausführungsbeispiel aber im Wesentlichen über den oberen Teil der Streichwalze 5 und der Gegenwalze 6, erfolgt die Abdichtung der Seitenabschlusswände 17, 18 jeweils durch eine Radialdichtung 17a, 18a. So ist die erste Seitenabschlusswand 17 mittels einer Radialdichtung 17a gegenüber der Umfangsfläche 5a der Streichwalze 5 abgedichtet; die zweite Seitenabschlusswand 18 ist mittels einer Radialdichtung 18a gegenüber der Umfangsfläche 6a der Gegenwalze 6 abgedichtet.

Die beiden Radialdichtungen 17a bzw. 18a zwischen der ersten Seitenabschlusswand 17 und der Streichwalze 5 sowie zwischen der zweiten Seitenabschlusswand 18 und der Gegenwalze 6 sind Spaltdichtungen, die zwischen der jeweils zugeordneten Walzenumfangsfläche 5a bzw. 6a und einer Zylinderteilfläche der Seitenabschlusswand 17 bzw. 18 einen Dichtspalt bilden. Die jeweils den Dichtspalt begrenzende Zylinderteilfläche weist eine in Walzendrehrichtung in den Aufnahmeraum zurückführende Rückführ-Wendelnut auf, so dass die in den Dichtspalt eindringende Streichmasse weitestgehend wieder in den Aufnahmeraum zurückgeführt wird.

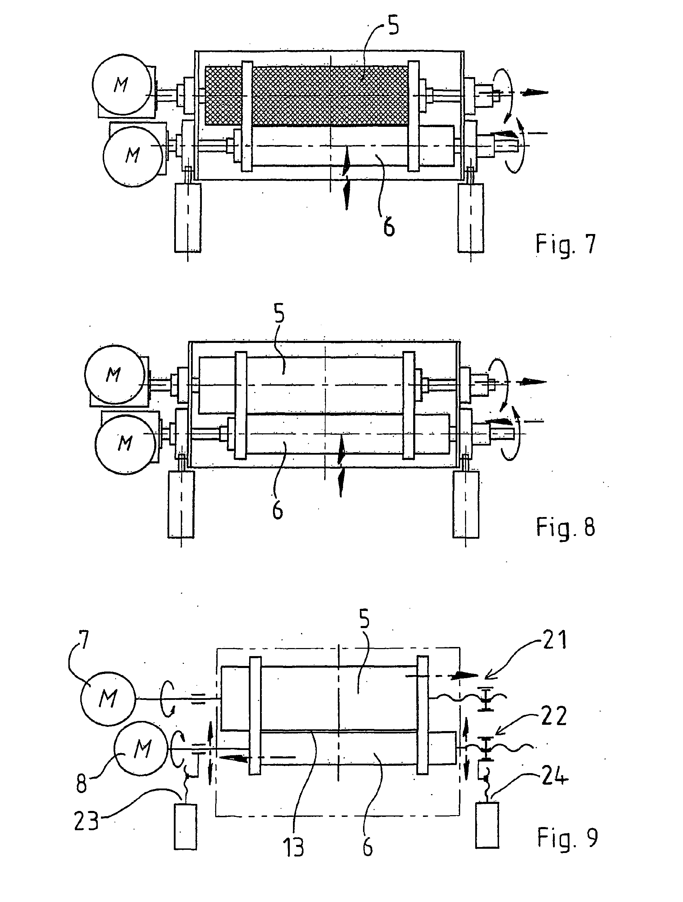

Die Streichwalze 5 und die Gegenwalze 6 sind axial gegeneinander versetzt und axial relativ zueinander verstellbar. Hierzu greift - wie in Fig. 9 schematisch dargestellt ist - an der Streichwalze 5 eine axiale Verstellspindel 21 an, durch den die Streichwalze 5 zusammen mit ihrem Walzenantrieb 7 axial verstellt werden kann. In entsprechender Weise kann die Gegenwalze 6 zusammen mit ihrem Walzenantrieb 8 durch eine Verstellspindel 22 axial verschoben werden. Außerdem kann die Gegenwalze 6 durch beidseitige Verstellantriebe 23 und 24 radial gegenüber der Streichwalze 5 verstellt werden, um eine Einstellung der Spaltbreite des Walzenspaltes 13 zu ermöglichen.

Fig. 1 zeigt die Streichwalze 5 und die Gegenwalze 6 in einer ersten Breiteneinstellung. Der Abstand b₁ zwischen den beiden Seitenabschlusswänden 17, 18 bestimmt die Spaltlänge des Walzenspaltes 13 und damit die Breite des aus dem Walzenspalt austretenden Streichmassenfilms.

Bei der in Fig. 2 dargestellten Breiteneinstellung sind die Streichwalze 5 und die Gegenwalze 6 axial so gegeneinander verschoben, dass sich ein größerer Abstand b₂ zwischen den beiden Seitenabschlusswänden 17, 18 und damit eine größere Filmbreite des austretenden Streichmassenfilm ergibt.

In den Fig. 1 und 2 ist angedeutet, dass die Oberflächen der Streichwalze 5 und der Gegenwalze 6 geriffelt sind. Trotz dieser Riffelung ist mit den beschriebenen Spaltdichtungen ( Radialdichtungen 17a und 18a) eine ausreichende Abdichtung zwischen den Seitenabschlusswänden 17, 18 und den Oberflächen 5a bzw. 6a der Walzen gewährleistet. In Fig. 7 ist angedeutet, dass eine der beiden Walzen, beispielsweise die Streichwalze 5, mit einer Riffelung an der Oberfläche 5a ausgeführt sein kann, während die Gegenwalze 6 mit glatter Oberfläche 6a ausgeführt sein kann. Bei dem in Fig. 8 dargestellten Beispiel sind die Streichwalze 5 und Gegenwalze 6 mit glatten Oberflächen 5a bzw. 6a ausgeführt.

## Patentansprüche

1. Streichkopf für Waffelblatt-Streichmaschinen mit einer Streichwalze und einer hierzu achsparallel angeordneten Gegenwalze, die drehbar und gegenläufig antreibbar in einem Gestell gelagert sind und zwischen sich einen Walzenspalt begrenzen, über dem sich ein Aufnahmeraum für die Streichmasse befindet, der beidseitig durch gegenüber der Streichwalze und der Gegenwalze abgedichtete erste und zweite Seitenabschlusswände begrenzt wird, **dadurch gekennzeichnet, dass** die Streichwalze (5) und die Gegenwalze (6) axial gegeneinander versetzt und axial relativ zueinander verstellbar sind und dass zumindest im Bereich des Aufnahmeraums (12) die erste Seitenabschlusswand (17) mittels einer Radialdichtung (17a) gegenüber der Umfangsfläche (5a) der Streichwalze (5) und die zweite Seitenabschlusswand (18) mittels einer Radialdichtung (18a) gegenüber der Umfangsfläche (6a) der Gegenwalze (6) abgedichtet ist.

2. Streichkopf nach Anspruch 1, **dadurch gekennzeichnet, dass** die erste Seitenabschlusswand (17) relativ zu der Gegenwalze (6) axial unverschiebbar gelagert ist und dass die zweite Seitenabschlusswand (18) relativ zu der Streichwalze (5) axial unverschiebbar gelagert ist.

3. Streichkopf nach Anspruch 1, **dadurch gekennzeichnet, dass** die beiden Radialdichtungen (17a, 18a) zwischen der ersten Seitenabschlusswand (17) und der Streichwalze (5) sowie zwischen der zweiten Seitenabschlusswand (18) und der Gegenwalze (6) Spaltdichtungen sind, die zwischen der jeweils zugeordneten Walzenumfangsfläche (5a bzw. 6a) und einer Zylinderteilfläche der Seitenabschlusswand (17 bzw. 18) jeweils einen Dichtspalt bilden.

4. Streichkopf nach Anspruch 3, **dadurch gekennzeichnet, dass** die jeweils den Dichtspalt begrenzende Zylinderteilfläche jeder Radialdichtung (17a, 18a) eine in Walzendrehrichtung in den Aufnahmeraum zurückführende Rückführ-Wendelnut aufweist.

## Claims

1. Coating head for waffle sheet coating machines having a coating roll and a mating roll which is arranged axially parallel to the former, which rolls are mounted in a frame such that they can be driven rotatably and in opposite directions, and which rolls delimit a roll nip between them, above which roll nip an accommodating chamber for the coating substance is situated which is delimited on both sides by first and second lateral terminating walls which are sealed with respect to the coating roll and the mating roll, **characterized in that** the coating roll (5) and the mating roll (6) are offset axially with respect to one another and can be adjusted axially relative to one another, and **in that**, at least in the region of the accommodating chamber (12), the first lateral terminating wall (17) is sealed by means of a radial seal (17a) with respect to the circumferential face (5a) of the coating roll (5) and the second lateral terminating wall (18) is sealed by means of a radial seal (18a) with respect to the circumferential face (6a) of the mating roll (6).

2. Coating head according to Claim 1, **characterized in that** the first lateral terminating wall (17) is mounted such that it cannot be displaced axially relative to the mating roll (6), and **in that** the second lateral terminating wall (18) is mounted such that it cannot be displaced axially relative to the coating roll (5).

3. Coating head according to Claim 1, **characterized in that** the two radial seals (17a, 18a) between the first lateral terminating wall (17) and the coating roll (5) and between the second lateral terminating wall (18) and the mating roll (6) are gap seals which in each case form a sealing gap between the respectively associated roll circumferential face (5a or 6a) and a cylinder sub-face of the lateral terminating wall (17 or 18).

4. Coating head according to Claim 3, **characterized in that that** cylinder sub-face of each radial seal (17a, 18a) which delimits in each case the sealing gap has a return helical groove which leads back into the accommodating chamber in the rotational direction of the roll.

## Revendications

1. Tête d'enduction pour machines d'enduction à plaque de gaufrage, comprenant un rouleau d'enduction et un contre-rouleau d'axe parallèle à celui-ci, qui sont montés de manière à pouvoir tourner et être entraînés en sens inverse dans un bâti, et qui délimitent entre eux une fente de rouleaux, au-dessus de laquelle se trouve un espace de réception pour la composition d'enduction, espace de réception des deux côtés par des première et deuxième parois de fermeture latérales étanches par rapport au rouleau d'enduction et au contre-rouleau, **caractérisée en ce que** le rouleau d'enduction (5) et le contre-rouleau (6) sont décalés axialement l'un par rapport à l'autre et sont réglables axialement l'un par rapport à l'autre, et **en ce qu'**au moins dans la région de l'espace de réception (12), la première paroi de fermeture latérale (17) est rendue étanche au moyen d'un joint d'étanchéité radial (17a) par rapport à la surface périphérique (5a) du rouleau d'enduction (5) et la deuxième paroi de fermeture latérale (18) est rendue étanche au moyen d'un joint d'étanchéité radial (18a) par rapport à la surface périphérique (6a) du contre-rouleau (6).

2. Tête d'enduction selon la revendication 1, **caractérisée en ce que** la première paroi de fermeture latérale (17) est montée de manière non déplaçable axialement par rapport au contre-rouleau (6) et **en ce que** la deuxième paroi de fermeture latérale (18) est montée de manière non déplaçable axialement par rapport au rouleau d'enduction (5).

3. Tête d'enduction selon la revendication 1, **caractérisée en ce que** les deux joints d'étanchéité radiaux (17a, 18a) entre la première paroi de fermeture latérale (17) et le rouleau d'enduction (5) ainsi qu'entre la deuxième paroi de fermeture latérale (18) et le contre-rouleau (6) sont des joints d'étanchéité à fente, qui forment, entre les faces périphériques associées respectivement des rouleaux (5a, respectivement 6a) et une surface partielle cylindrique de la paroi de fermeture latérale (17, respectivement 18), à chaque fois une fente d'étanchéité.

4. Tête d'enduction selon la revendication 3, **caractérisée en ce que** la surface partielle cylindrique respective de chaque joint d'étanchéité radial (17a, 18a) délimitant la fente d'étanchéité présente une rainure hélicoïdale de reflux dans la direction de rotation des rouleaux refluant dans l'espace de réception.
